(19) Europäisches Patentamt
European Patent Office
Office européen des brevets

(11) **EP 3 670 174 A1**

(12) **EUROPEAN PATENT APPLICATION**
published in accordance with Art. 153(4) EPC

(43) Date of publication:
**24.06.2020 Bulletin 2020/26**

(51) Int Cl.:
**B32B 5/18** (2006.01)          **B60J 1/00** (2006.01)
**C09K 3/18** (2006.01)          **G02B 1/18** (2015.01)

(21) Application number: **17922007.4**

(22) Date of filing: **16.08.2017**

(86) International application number:
**PCT/JP2017/029477**

(87) International publication number:
**WO 2019/035192 (21.02.2019 Gazette 2019/08)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **Nissan Motor Co., Ltd.**
**Yokohama-shi, Kanagawa 221-0023 (JP)**

(72) Inventors:
• **KOBAYASHI, Ryota**
  **Atsugi-shi**
  **Kanagawa 243-0123 (JP)**

• **NOGUCHI, Yuji**
  **Atsugi-shi**
  **Kanagawa 243-0123 (JP)**
• **MURAKAMI, Ryou**
  **Atsugi-shi**
  **Kanagawa 243-0123 (JP)**

(74) Representative: **Hoefer & Partner Patentanwälte mbB**
**Pilgersheimer Straße 20**
**81543 München (DE)**

(54) **ANTIFOULING STRUCTURE**

(57)    An antifouling structure of the present invention is produced by impregnating a base having a porous structure layer including micropores with a non-volatile liquid.

A relationship between an average opening diameter of the micropores and the number of the micropores per unit area of the porous structure layer satisfies the following formula (1). The non-volatile liquid retained in the porous structure layer can be sufficiently utilized, and antifouling property can be exhibited for a long time.

$$\text{Average Opening Diameter (nm)} \times \text{Number of Micropores} / 100 \ (\text{nm}^2) > 0.6 \ \text{nm}^{-1} \dots$$

Formula (1)

EP 3 670 174 A1

*FIG. 1*

**Description**

TECHNICAL FIELD

The present invention relates to an antifouling structure. More specifically, the present invention relates to an antifouling structure with improved durability.

BACKGROUND ART

Conventionally, water-repellant articles which have a void layer with a void structure, void portions of the void layer being impregnated with a water-repellent material, is known.

Patent Document 1 discloses a water-repellent article that is produced by forming a void layer having a void structure substantially made of an inorganic material and thereafter impregnating a void portion of the void layer with a water-repellent material.

According to the disclosure, since the interior of the voids of the water-repellent article is impregnated with the water-repellent material, the water-repellent material oozes out of the interior of the void layer onto a surface region, even when the water-repellent material is damaged or removed. Therefore, high water repellency and high water slipperiness (water-droplet sliding property) can be maintained.

CITATION LIST

Patent Document

Patent Document 1: WO 2008/120505A

SUMMARY OF INVENTION

Technical Problem

However, the void layer in the water-repellent article disclosed in Patent Literature 1 is produced by accumulating substantially spherical metal-oxide particles. Therefore, when a particle diameter of the metal oxide particles is increased to increase a voidage, an opening diameter of the voids is increased to reduce a capillary force. This makes it less likely to allow the water-repellent material to ooze out to the surface region.
Therefore, an amount of the water-repellent material with which the void layer can be impregnated, and an amount of the water-repellent material that can be utilized are limited. This makes it difficult to maintain the water repellency for a long time.

The present invention has been made in view of such problems in the art, and an object thereof is to provide a highly-durable antifouling structure that can sufficiently utilize a non-volatile liquid retained in a porous structure layer, and can exhibit antifouling property for a long time.

Solution to Problem

An antifouling structure of the present invention is produced by impregnating a base having a porous structure layer including micropores with a non-volatile liquid. A relationship between an average opening diameter of the micropores and the number of the micropores per unit area of the porous structure layer satisfies the following formula (1).

$$\text{Average Opening Diameter (nm)} \times \text{Number of Micropores} / 100 \ (\text{nm}^2) > 0.6 \ \text{nm}^{-1} \ ...$$

Formula (1)

Advantageous Effects of Invention

According to the present invention, since the porous structure layer includes the micropores that exhibit a sufficient capillary force, the retained non-volatile liquid can be sufficiently utilized. A highly-durable antifouling structure that exhibits antifouling property for a long time is thus provided.

BRIEF DESCRIPTION OF DRAWINGS

FIG. 1 is a schematic cross-sectional view illustrating an example of an antifouling structure of the present invention.
FIG. 2 is an SEM image of a porous structure layer A.
FIG. 3 is an SEM image of a porous structure layer B.
FIG. 4 is an SEM image of a porous structure layer C.
FIG. 5 is an SEM image of a porous structure layer D.
FIG. 6 is an SEM image of a porous structure layer E.
FIG. 7 is an explanatory view illustrating a method of evaluating water-droplet sliding property.

DESCRIPTION OF THE EMBODIMENTS

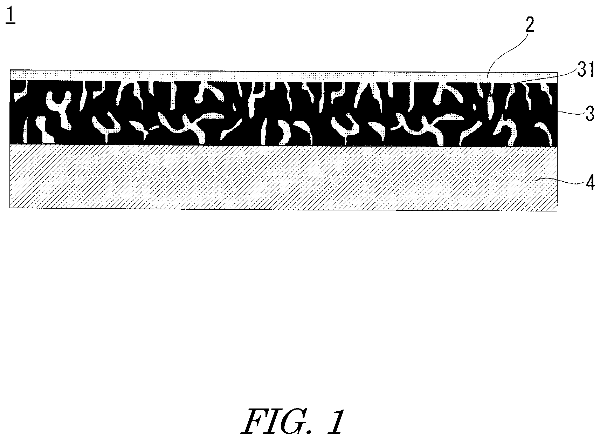

An antifouling structure of the present invention will be described in detail. As illustrated in FIG. 1, the antifouling structure includes a non-volatile liquid 2 and a porous structure layer 3 with micropores retaining the non-volatile liquid 2. A relationship between the number of micropores per unit area of the porous structure layer and an average opening diameter of the micropores satisfies the following formula (1).

$$\text{Average Opening Diameter (nm)} \times \text{Number of Micropores} / 100 \ (\text{nm}^2) > 0.6$$

$$\text{nm}^{-1} \text{... Formula (1)}$$

In the antifouling structure, a capillary force allows the non-volatile liquid 2 to ooze out of an inside of the porous structure layer 3 by an amount sufficient for covering a surface of the porous structure layer 3. The surface of the porous structure layer is thus covered with the non-volatile liquid to exhibit antifouling property for a long time.
Specifically, since the antifouling structure has the large number of micropores with a small opening diameter, the capillary force is increased by the small opening diameter of the micropores to allow the non-volatile liquid to ooze out to the surface of the porous structure layer. Further, since the number of the micropores per unit area is large, an interval between the micropores which are adjacent to each other is small. Therefore, the surface of the porous structure layer can be covered with the non-volatile liquid that is oozed out by the capillary force.

Porous Structure Layer

The porous structure layer 3 is, what is called, a sponge-like structure in which substantially spherical voids that are randomly disposed in three-dimensional directions communicate to each other to form the micropores. The porous structure layer 3 has affinity for the non-volatile liquid 2 (described later), and retains the non-volatile liquid 2 in the micropores.
In the sponge-like structure, a structural material of the porous structure layer is randomly continuous in a mesh-like pattern in the three-dimensional directions, and the substantially spherical voids communicate to each other. A relationship between the shape of the voids and the shape of the structural material of this porous structure layer is an inverse of that of the porous structure layer formed by accumulating particles.
Therefore, even when a porosity of the porous structure layer is increased, the opening diameter of the micropores is not increased. The capillary force that allows the non-volatile liquid to ooze out by the sufficient amount onto the surface is thus generated.
The substantially spherical shape of the voids of the present invention is not limited to a spherical shape close to a perfect sphere, and may be a partially-recessed spherical shape, a spindle shape with a major diameter and a minor diameter that are significantly different from each other, or a winding bar shape.
It is more preferred that a relationship between the number of the micropores per unit area of the porous structure layer 3 and the average opening diameter of the micropores satisfy the following formula (2).

$$\text{Average Opening Diameter (nm)} \times \text{Number of Micropores} / 100 \ (\text{nm}^2) > 0.75$$

$$\text{nm}^{-1} \text{... Formula (2)}$$

When the porous structure layer 3 satisfies the formula (2), the capillary force is further increased, and the interval between the micropores which are adjacent to each other is reduced. This allows the surface to be wetted with the non-volatile liquid even when the non-volatile liquid to be used has low affinity for the porous structure layer.

The number of the micropores per unit area was counted by photographing a range of □3000 nm from above the surface of the porous structure layer with a scanning electron microscope (SEM), and detecting a micropore portion by binarizing an SEM image through image analysis in which -0.5 nm of an average line as a result of measurement of a surface roughness with an AFM was set as a threshold. Then, the number of the micropores per unit area was converted to the number of the micropores per □10 nm.

A diameter of a circle with the same area as an area of an opening portion of each of the micropores was used as the average opening diameter, the area of the opening portion per one micropore being determined by dividing a sum of areas in the micropore portion in the range of □3000 nm by the number of the micropores in the range of □3000 nm. Among the micropores, those which are so small as not allow entry of molecules of the non-volatile liquid do not contribute to the retention of the non-volatile liquid. Therefore, those micropores which are less than 10 nm are not considered in the determination of the number of the micropores and the average opening diameter.

A difference in surface free energy between the porous structure layer and the non-volatile liquid is preferably 10 mJ/m$^2$ or less, more preferably 5 mJ/m$^2$ or less. When the difference in surface free energy is within these ranges, the porous structure layer is wetted with the non-volatile liquid, and the great capillary force is generated.

The surface free energy of the porous structure layer, which is influenced by the shape and a condition of the porous structure layer, can be calculated by the Cassie and Baxter method, the Owens and Wendt method, or the like, specifically, calculated from a contact angle, when water and diiodomethane is dropped on a smooth base.

The porosity of the porous structure layer is preferably 4% to 60%, more preferably 4% to 45%, much more preferably 30% to 45%.

When the porosity is within these ranges, both mechanical strength of the porous structure layer and a retention amount of the non-volatile liquid can be secured. When the porosity is excessively low, the retention amount of the non-volatile liquid may decrease. When the porosity is excessively high, the mechanical strength may decrease, which may collapse the voids to reduce the retention amount of the non-volatile liquid. Further, the voids may excessively communicate to each other, which may increase the surface roughness to hinder the dirt from sliding off.

The porosity can be measured, for example, by a gas adsorption method in which nitrogen ($N_2$) or the like is used, or mercury porosimetry.

The surface roughness (Rz) of the porous structure layer is preferably 10 nm or less.

When Rz is 10 nm or less, the non-volatile liquid that oozes out of the inside of the porous structure layer by capillary action and the like covers the surface of the porous structure layer, and forms a smooth surface. This can prevent the porous structure layer from being exposed.

An average film thickness (h) of the porous structure layer is preferably within a range of 50 nm to 1000 nm, more preferably within a range of 200 nm to 350 nm. When the average film thickness of the porous structure layer is 50 nm or more, the porous structure layer can sufficiently retain the non-volatile liquid. This improves durability of the antifouling structure.

When the average film thickness is 1000 nm or less, formation of cracks due to volume shrinkage and the like can be prevented, when the porous structure layer is manufactured. This can prevent an increase of a haze value due to such cracks and the like, and thereby improve visibility.

The porous structure layer is preferably made of a silicon oxide-based inorganic material. When the porous structure layer is made of an inorganic material that contains silicon oxide with high degree of hardness, the porous structure layer has improved resistance to sliding abrasion. This improves the durability of the antifouling structure.

The porous structure layer may be made of any inorganic material that has high optical transparency. Examples of such materials include silica glass, soda glass, borosilicate glass, and the like that contain 60 wt% or more of silicon oxide ($SiO_2$).

The surface of the porous structure layer and inner surfaces of the micropores are preferably modified with a modifier.

Modification of the porous structure layer can reduce the surface energy of the porous structure layer. This allows the non-volatile liquid to sufficiently spread and wet the surface of the porous structure layer, and allows the non-volatile liquid to ooze out onto the surface of the porous structure layer by capillary action.

Modifiers that can be used include modifiers that contain a compound having a functional group that can bind to the inorganic material of the porous structure layer. Silane coupling agents known in the art can be used as such modifiers.

Examples of such silane coupling agents include a silane compound having an alkoxyoligomeric structure with a hydrocarbon-based functional group, and a silane compound having an alkoxyoligomeric structure with a fluorine containing functional group.

Non-Volatile Liquid

The non-volatile liquid 2 spreads and wets the surface of the porous structure layer 3 to form a smooth surface on an outermost surface of the antifouling structure 1. The non-volatile liquid 2 thereby repels dirt, such as water, oil, sand and dust, to reduce adhesion of such dirt.

The non-volatile liquid that can be used include liquid with low surface energy, such as silicone oils and fluorinated oils. It is preferred that these oils are non-reactive oils that do not have a reactive functional group, such as -OH, -NH$_2$, -COOH, -CH=CH- and -C=C-.

When the non-volatile liquid has a reactive functional group, the non-volatile liquid may react with the dirt to deteriorate antifouling property.

The silicone oils that can be used include straight-chain or cyclic silicone oils. Examples of straight-chain silicone oils include, what is called, straight silicone oils and modified silicone oils that have a molecular structure with dimethyl silicone as a main chain.

Examples of straight silicone oils include dimethyl silicone oils and methylphenyl silicone oils.

Examples of modified silicone oils include polyether-modified silicone oils, aralkyl-modified silicone oils and long-chain alkyl modified silicone oils.

Examples of cyclic silicone oils include a cyclic dimetylsiloxane oil and the like.

Examples of the fluorinated oils include a fluoropolyether oil, a perfluoropolyether oil, and the like. It is preferred that the fluorinated oils have a molecular structure having perfluoroether as a main chain.

It is preferred that the non-volatile liquid has a viscosity at 0°C of 160 mm$^2$/s or less, more preferably within a range of 8 mm$^2$/s to 80 mm$^2$/s.

When the viscosity of the non-volatile liquid is 160 mm$^2$/s or less, water repellency and the antifouling property can be improved. When the viscosity is 8 mm$^2$/s or more, the resistance to loss at high temperature can be improved.

Regarding the viscosity, it is preferred that loss of the non-volatile liquid after heating at 120°C for 24 hours is less than 35 mass%. When the loss on heating is 35 mass%, the antifouling structure can have high durability.

For example, when the antifouling structure is used in automotive application, the performance is less likely to be deteriorated due to natural evaporation of the non-volatile liquid, and the antifouling structure can maintain good antifouling property at ambient temperature (5°C to 35°C) for a long time.

The loss on heating can be determined by spreading 30 g of the non-volatile liquid on a 40φ petri dish, heating it at 120°C for 24 hours and measuring the loss.

Base

As the base 4, a base containing an inorganic material such as transparent glass can be used.

Method of Producing Antifouling Structure

To produce the antifouling structure of the present invention, as the first step, the porous structure layer is formed by a sol-gel method. Specifically, the porous structure layer can be formed by changing a solution containing the material of the porous structure layer into a sol by hydrolysis and polymerization, applying the sol onto the base, or the like, allowing the reactions to further proceed to change the applied sol into a gel, drying and baking the gel, and modifying the surface and the inner surface of the micropores.

The sol can be applied by a method known in the art such as spin coating, spraying, roll coating, flow coating or dip coating.

The average opening diameter of the micropores can be adjusted by changing conditions of reactions at the time of forming the sol. Specifically, when an amount of water to be added is increased to allow the reactions to slowly proceed, silica components can be prevented from bonding to each other to eliminate the surface roughness and to thereby smooth the surface of the porous structure layer. Further, phase separation agents such as an organic solvent can be highly dispersed. This can reduce the average opening diameter.

The surface of the porous structure layer can be modified by a method known in the art such as reflux, vapor deposition or immersion, and the surface is modified with the modifier such as the silane coupling agent.

Thereafter, a part of the modifier, which do not contribute to the modification of the surface, is washed and removed. When the surplus of the modifier is removed, the modifier, which has reactivity, can be prevented from being mixed with the non-volatile liquid.

The porous structure layer is impregnated with the non-volatile liquid such as silicone-based oil or fluorinated oil. The antifouling structure of the present invention can thus be produced.

Antifouling Structure

It is preferred that the antifouling structure has a parallel light transmittance (Tp) of 90% or more and a haze value (Hz) of 1% or less. When the parallel light transmittance and the haze value are within these ranges, the antifouling structure satisfies transparency required for automobile parts, optical parts and the like.

The parallel light transmittance can be measured by setting a sample film in a measurement device with an integrating sphere specified by JIS K7136, emitting light to the front side of the sample, and capturing the light that has penetrated the antifouling structure by using the integrating sphere.
The haze value can be measured according to JIS K7136 with a haze/transmittance meter (Murakami Color Research Laboratory Co., Ltd.).

Automobile Part

The automobile part of the present invention includes the antifouling structure of the present invention. With the antifouling structure, the automobile part can maintain high antifouling performance for a long time. This allows reducing the frequency of car wash or cleaning, and securing a good view under a circumstance of a rainy whether or a dirt road.

Examples of such automobile parts include camera lenses, mirrors, glass windows, painted surfaces of bodies and the like, various light covers, door handles, meter panels, window panels, radiator fins, evaporators, and the like. However, the automobile part is not limited thereto.

EXAMPLES

Hereinafter, the present invention will be described in more detail by way of examples. However, the present invention is not limited to the following examples.

Preparation of Porous Structure Layer A

A screw-top tube A charged with 0.68 g of pure water, 1.5 g of triethylene glycol, 0.78 g of isopropyl alcohol, and 0.3 g of sulfuric acid, and a screw-top tube B charged with 8.04 g of tetraethoxysilane (ethylsilicate 40, Colcoat Co., Ltd.), and 0.78 g of isopropyl alcohol were heated in a water bath maintained at 25°C.

The materials in the screw-top tube B were transferred to the screw-top tube A, and the mixture was stirred at 1500 rpm. After the temperature in the screw-top tube A reached 30°C (peak temperature), the mixture was further stirred for 30 minutes.

After the stirring, an aliquot (5.0 g) of the solution in the screw-top tube A was collected to a screw-top tube C. Then, 20 g of isopropyl alcohol was added thereto, and the mixture was stirred at 1500 rpm for 1 minute. A porous-structure-layer coating liquid was thus obtained.

A soda lime glass (□100 mm), which was treated with plasma at a rate of 1 cm$^2$/s by using a plasma generator, was spin-coated by an aliquot (1.5 ml) of the porous-structure-layer coating liquid by using a spin coater (K359D-1 SPINNER, Kyowa Rien Co., Ltd.) at a rotation speed of 100 rpm for 3 seconds, 500 rpm for 5 seconds, and then 1000 rpm for 15 seconds.
The spin coating was carried out in the air conditioned at a temperature of 25°C and a humidity of 60%.

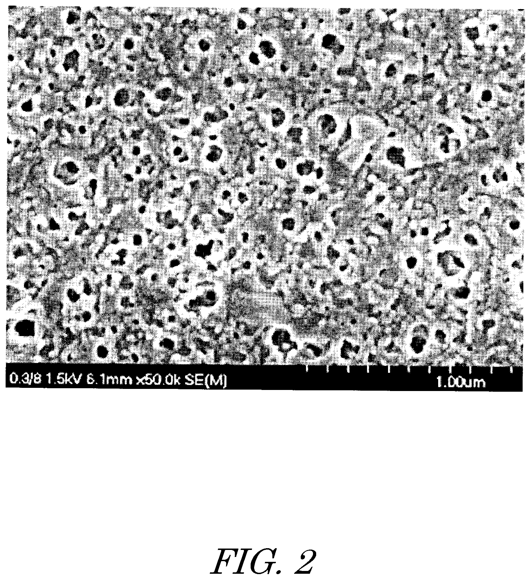

The spin-coated soda lime glass was placed on a flat surface and dried with air for 2 minutes and then in a drying oven at 150°C for 1 hour. Then, the coated soda lime glass was allowed to cool down to room temperature in the drying oven. Thereafter, the coated soda lime glass was baked in a muffle furnace (FP410, Yamato Scientific Co., Ltd.) at 500°C for 1 hour and then allowed to cool down to room temperature in the muffle furnace. A porous structure layer A was thus formed on the soda lime glass base. An SEM image of the porous structure layer A is shown in FIG. 2.

Preparation of Porous Structure Layer B

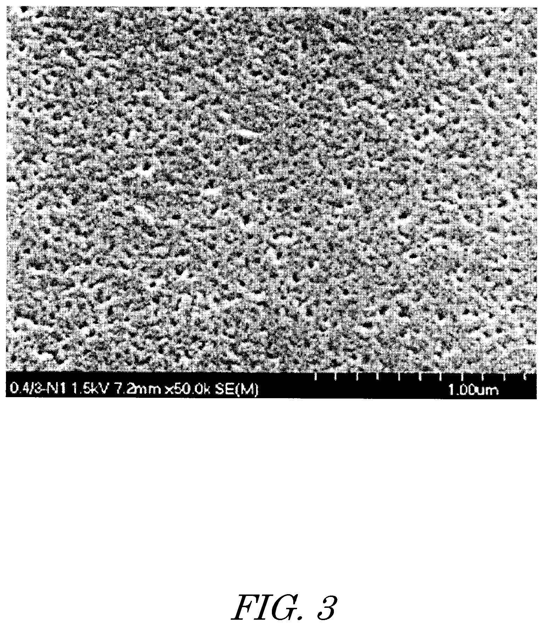

A porous structure layer B was prepared in the same way as that for the porous structure layer A except charging the screw-top tube A with 0.92 g of pure water, 1.5 g of triethylene glycol, 0.78 g of isopropyl alcohol, and 0.3 g of sulfuric acid. An SEM image of the porous structure layer B is shown in FIG. 3.

Preparation of Porous Structure Layer C

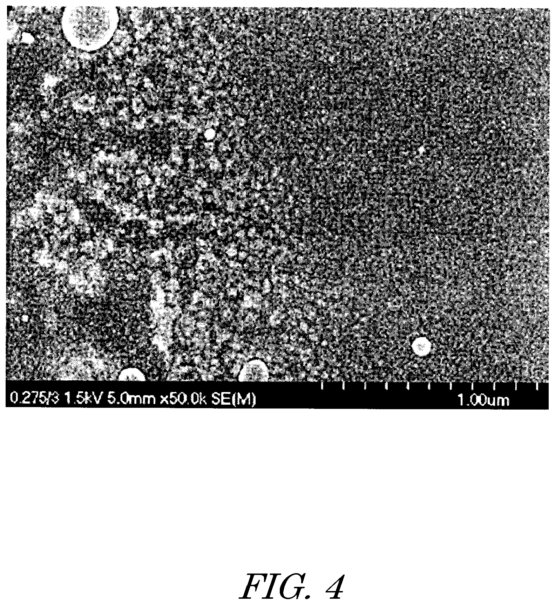

A porous structure layer C was prepared in the same way as that for the porous structure layer A except charging the screw-top tube A with 0.64 g of pure water, 1.5 g of triethylene glycol, 0.78 g of isopropyl alcohol, and 0.3 g of sulfuric acid. An SEM image of the porous structure layer C is shown in FIG. 4.

Preparation of Porous Structure Layer D

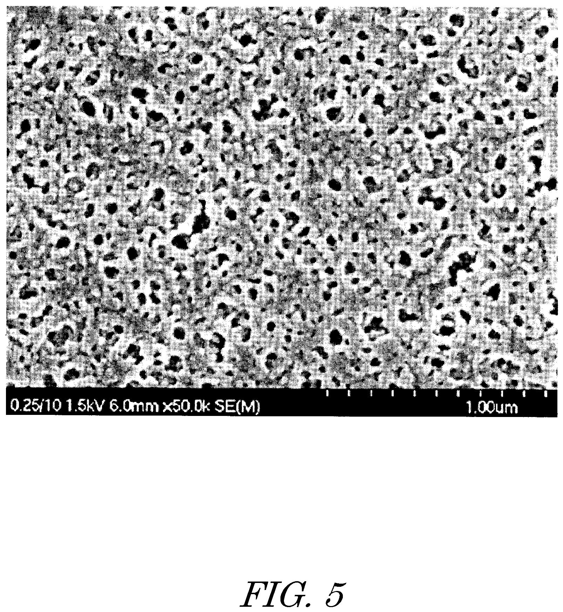

A porous structure layer C was prepared in the same way as that for the porous structure layer A except charging the screw-top tube A with 0.56 g of pure water, 1.5 g of triethylene glycol, 0.78 g of isopropyl alcohol, and 1.0 g of sulfuric acid. An SEM image of the porous structure layer D is shown in FIG. 5.

Preparation of Silica Layer

A silica layer was prepared in the same way as that for the porous structure layer A except charging the screw-top tube A with 0.94 g of pure water, 0.78 g of isopropyl alcohol, and 0.3 g of sulfuric acid.

Preparation of Porous Structure Layer E

The porous-structure-layer coating liquid was obtained in the same way as that for the porous structure layer A except charging the screw-top tube A with 1.04 g of pure water, 1.65 g of triethylene glycol, 0.78 g of isopropyl alcohol, and 0.2 g of sulfuric acid, and charging the screw-top tube B with 11.25 g of tetraethoxysilane (Tetr-thoxysilane, min. 98% TEOS: Wako Pure Chemical Corporation) and 0.78 g of isopropyl alcohol.

A soda lime glass (□100 mm), which was treated with plasma at the rate of 1 cm$^2$/s by using the plasma generator, was spin-coated by the aliquot (1.5 ml) of the porous-structure-layer coating liquid by using the spin coater (K359D-1 SPINNER, Kyowa Rien Co., Ltd.) at the rotation speed of 100 rpm for 3 seconds, 500 rpm for 5 seconds, and then 1000 rpm for 15 seconds.
The spin coating was carried out in the air conditioned at the temperature of 25°C and the humidity of 60%.

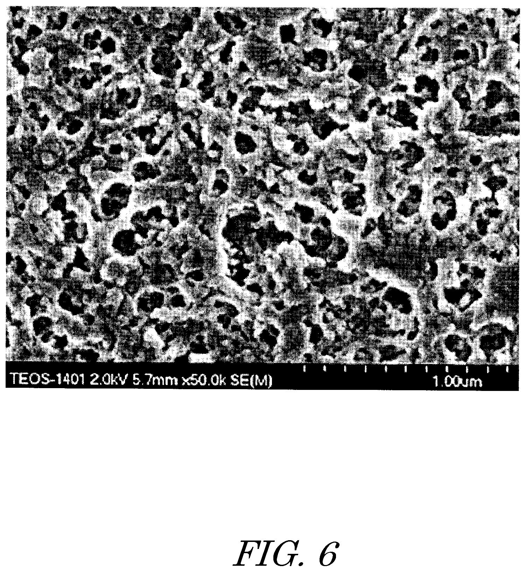

The spin-coated soda lime glass was dried in the drying oven at 150°C for 1 hour. Then, the coated soda lime glass was allowed to cool down to room temperature in the drying oven.
Thereafter, the coated soda lime glass was baked in the muffle furnace (FP410, Yamato Scientific Co., Ltd.) at 500°C for 1 hour and then allowed to cool down to room temperature in the muffle furnace. A porous structure layer E was thus formed on the soda lime glass base. An SEM image of the porous structure layer E is shown in FIG. 6.

Example 1

0.37 g of a hydrocarbon-based modifier (KBM-3103C, Shin-Etsu Silicone Corp.), 0.14 g of 0.1% nitric acid, 0.26 g of pure water, and 50 g of isopropyl alcohol were refluxed at a temperature of 60°C for 2 hours to modify a surface of the porous structure layer A and micropores therein.

The porous structure layer A with the modified surface was dried in the drying oven at 150°C for 1 hour and then allowed to cool down to room temperature in the drying oven. Thereafter, this porous structure layer A was soaked in toluene and washed with an ultrasonic cleaner (BAKUSEN W-113 Mk-II, Yamato Scientific Co., Ltd.) in a BAKUSEN mode (24 kHz and 31 kHz superimposed) for 5 minutes. Surface free energy at the time when the smooth base was modified with the hydrocarbon-based modifier was 23 mJ/m$^2$.

0.006 g of a non-volatile liquid (dimethylpolysiloxane KF-96, Shin-Etsu Silicone Corp., viscosity of 100 mm$^2$/sec, surface free energy of 23 mJ/m$^2$) was applied to the washed porous structure layer A, and the washed porous structure layer A was left in this state for 1 hour to be impregnated with the non-volatile liquid. An antifouling structure was thus produced.

Example 2

An antifouling structure was produced in the same way as that in Example 1 except using the porous structure layer B.

Example 3

An antifouling structure was produced in the same way as that in Example 1 except using the porous structure layer C.

Example 4

An antifouling structure was produced in the same way as that in Example 1 except using the porous structure layer D.

Example 5

A fluorine modifier (FLUOROSURF FG-5020, Fluoro Technology.) was refluxed at the temperature of 60°C for 2 hours to modify the surface of the porous structure layer A and the micropores therein.
The porous structure layer A with the modified surface was dried in the drying oven at 150°C for 1 hour and then allowed to cool down to room temperature in the drying oven. Thereafter, this porous structure layer A was soaked in a fluorine solvent (NOVEC7100, 3M Corp.) and washed with the ultrasonic cleaner (BAKUSEN W-113 Mk-II, Yamato Scientific Co., Ltd.) in the BAKUSEN mode (24 kHz and 31 kHz superimposed) for 5 minutes.
The surface free energy at the time when the smooth base was modified with the fluorine modifier was 11 $mJ/m^2$.
0.011 g of a non-volatile liquid (Krytox GPL103, DuPont Corp., viscosity of 80 $mm^2$/sec, surface free energy of 17 $mJ/m^2$) was applied to the porous structure layer A with the modified surface, and the porous structure layer A with the modified surface was left in this state for 1 hour to retain the non-volatile liquid. An antifouling structure was thus produced.

Example 6

An antifouling structure was produced in the same way as that in Example 5 except using the porous structure layer B.

Example 7

An antifouling structure was produced in the same way as that in Example 5 except using the porous structure layer C.

Comparative Example 1

0.37 g of a hydrocarbon-based modifier (KBM-3063, Shin-Etsu Silicone Corp.), 0.14 g of 0.1% nitric acid, 0.26 g of pure water, and 50 g of isopropyl alcohol were refluxed at the temperature of 60°C for 1 hour to modify a surface of a soda lime glass, which was treated with plasma at the rate of 1 $cm^2$/s by using the plasma generator.
The soda lime glass with the modified surface was dried in the drying oven at 150°C for 1 hour and then allowed to cool down to room temperature in the drying oven. Thereafter, this soda lime glass was soaked in toluene and washed with the ultrasonic cleaner (BAKUSEN W-113 Mk-II, Yamato Scientific Co., Ltd.) in the BAKUSEN mode (24 kHz and 31 kHz superimposed) for 5 minutes.
0.006 g of a non-volatile liquid (dimethylpolysiloxane KF-96, Shin-Etsu Silicone Corp.) was applied to the washed soda-lime glass, and the washed soda-lime glass was left in this state for 1 hour to be impregnated with the non-volatile liquid. An antifouling structure was thus produced.

Comparative Example 2

An antifouling structure was produced in the same way as that in Example 1 except using the silica layer.

Comparative Example 3

An antifouling structure was produced in the same way as that in Example 1 except using the porous structure layer E.

Comparative Example 4

Vapor deposition of a fluorine water-repellent treatment agent (OPTOOL DSX) was carried out on a soda lime glass, which was treated with plasma at the rate of 1 $cm^2$/s by using the plasma generator, such that this agent was formed into a film with a film thickness of 10 nm. Further, this soda lime glass was soaked in the fluorine solvent (NOVEC7100, 3M Corp.) and washed with the ultrasonic cleaner (BAKUSEN W-113 Mk-II, Yamato Scientific Co., Ltd.) in the BAKUSEN mode (24 kHz and 31 kHz superimposed) for 5 minutes.
0.011 g of the non-volatile liquid (Krytox GPL103, DuPont Corp.) was applied to the soda lime glass with a modified surface, and the soda lime glass with the modified surface was left in this state for 1 hour to retain the non-volatile liquid. An antifouling structure was thus produced.

Comparative Example 5

An antifouling structure was produced in the same way as that in Example 5 except using the porous structure layer E.

Table 1 shows configuration features of the antifouling structures of Examples 1 to 7 and Comparative Examples 1 to 5.

Table 1 (1/2)

| | Porous Structure Layer | Opening Diameter × Number of Micropores (nm-1) | Average Opening Diameter (nm) | Porosity (%) | Surface Roughness RZ (nm) | Film Thickness of Porous Structure Layer (nm) |
|---|---|---|---|---|---|---|
| Example 1 | A | 0.75 | 48 | 30 | 5.67 | 313 |
| Example 2 | B | 1.12 | 35 | 4 | 5.7 | 300 |
| Example 3 | C | 1.58 | 33 | 45 | 6.2 | 350 |
| Example 4 | D | 0.6 | 54 | 60 | 3.18 | 248 |
| Comparative Example 1 | Soda Lime Glass | 0 | N/A | 0 | 3 | - |
| Comparative Example 2 | Silica Film | 0 | N/A | 0 | 5 | - |
| Comparative Example 3 | E | - | - | 65 | 5.96 | 350 |
| Example 5 | A | 0.75 | 48 | 30 | 5.67 | 313 |
| Example 6 | B | 1.12 | 35 | 4 | 5.7 | 300 |
| Example 7 | C | 1.58 | 33 | 45 | 6.2 | 350 |
| Comparative Example 4 | Soda Lime Glass | 0 | N/A | 0 | 3 | - |
| Comparative Example 5 | E | - | - | 65 | 5.96 | 350 |
| | Modifier | Modification Condition | Non-volatile Liquid | Viscosity (mm2/sec) | | |
| Example 1 | KBM-3103c | Reflux | KF-96 | 100 | | |
| Example 2 | KBM-3103c | Reflux | KF-96 | 100 | | |
| Example 3 | KBM-3103c | Reflux | KF-96 | 100 | | |
| Example 4 | KBM-3103c | Reflux | KF-96 | 100 | | |
| Comparative Example 1 | KBM-3063 | Reflux | KF-96 | 100 | | |
| Comparative Example 2 | KBM-3103c | Reflux | KF-96 | 100 | | |
| Comparative Example 3 | KBM-3103c | Reflux | KF-96 | 100 | | |
| Example 5 | FLUOROSURF FG-5020 | Reflux | K103 | 80 | | |
| Example 6 | FLUOROSURF FG-5020 | Reflux | K103 | 80 | | |

(continued)

|  | Modifier | Modification Condition | Non-volatile Liquid | Viscosity (mm2/sec) |
|---|---|---|---|---|
| Example 7 | FLUOROSURF FG-5020 | Reflux | K103 | 80 |
| Comparative Example 4 | OPTOOL DSX | Vapor Deposition | K103 | 80 |
| Comparative Example 5 | FLUOROSURF FG-5020 | Immersion | K103 | 80 |

Since micropores in the porous structure layer E used in Comparative Examples 3 and 5 were deformed, measurement of these micropores failed.

Evaluation of Performance

The antifouling structures of Examples 1 to 7 and Comparative Examples 1 to 5 were evaluated for heat resistance and abrasion resistance by a water-droplet sliding property test (described later). Tables 2 shows results of the evaluation.

Water-Droplet Sliding Property Test

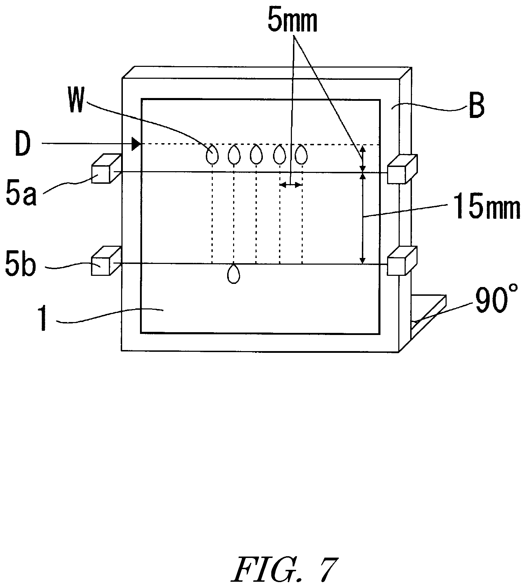

As illustrated in FIG. 7, the droplet sliding property was evaluated by vertically placing each of the antifouling structures, dropping 5-µL droplets of water thereon, and measuring sliding speeds of these water droplets W.
To measure the sliding speeds of the water droplets W, infrared sensors 5a and 5b were disposed at an interval of 15 mm, one being higher than the other. Five droplets at intervals of 5 mm in the horizontal direction were dropped at a droplet starting height D that was 5 mm above the upper infrared sensor. Sliding speeds of the five droplets at the time of advancing the interval of 15 mm were measured, and these speeds were averaged.

    ◎: The sliding speed of the water droplets was 5 mm/sec or more.
    ○: The sliding speed of the water droplets was more than 0 mm/sec and 5 mm/sec or less.
    ×: The sliding speed of the water droplets was 0 mm/sec.

Evaluation of Heat Resistance

Each of the antifouling structures was held at 90° for 4 hours in four cycles, and thereafter the water-droplet sliding property test was conducted.

Evaluation of Abrasion Resistance

A cloth (Toraysee, TORAY INDUSTRIES, INC.) was reciprocally slid 500 times against each of the antifouling structures, and thereafter the water-droplet sliding property test was conducted.

Table 2

|  | Heat Resistance | Abrasion Resistance | Haze (%) | Tt (%) |
|---|---|---|---|---|
| Example 1 | ◎ | ◎ | 0.1 | 93 |
| Example 2 | ○ | ○ | 0.2 | 93 |
| Example 3 | ◎ | ◎ | 0.5 | 93 |
| Example 4 | ○ | ○ | 0.2 | 93 |
| Comparative Example 1 | × | × | 0.1 | 92 |
| Comparative Example 2 | × | × | 0.2 | 93 |

(continued)

|  | Heat Resistance | Abrasion Resistance | Haze (%) | Tt (%) |
|---|---|---|---|---|
| Comparative Example 3 | × | × | 0.4 | 92 |
| Example 5 | ◎ | ◎ | 0.1 | 93 |
| Example 6 | ◎ | ◎ | 0.1 | 93 |
| Example 7 | ◎ | ◎ | 0.4 | 94 |
| Comparative Example 4 | × | × | 0.1 | 93 |
| Comparative Example 5 | × | × | 0.4 | 94 |

REFERENCE SIGNS LIST

1    Antifouling structure
2    Non-volatile liquid
3    Porous structure layer
31   Micropore
4    Base
5a   Infrared sensor
5b   Infrared sensor
6    Light source
D    Droplet starting height
W    Water droplet
B    Scale

**Claims**

1. An antifouling structure, in which a base having a porous structure layer is impregnated with a non-volatile liquid, wherein a relationship between the number of micropores per unit area of the porous structure layer and an average opening diameter of the micropores satisfies the following formula (1):

$$\text{Average Opening Diameter (nm)} \times \text{Number of Micropores} / 100 \ (nm^2) > 0.6 \ nm^{-1} \ ...$$

$$\text{Formula (1)}.$$

2. The antifouling structure according to claim 1, wherein the relationship between the number of the micropores per unit area of the porous structure layer and the average opening diameter of the micropores satisfies the following formula (2):

$$\text{Average Opening Diameter (nm)} \times \text{Number of Micropores} / 100 \ (nm^2) > 0.75 \ nm^{-1} \ ...$$

$$\text{Formula (2)}.$$

3. The antifouling structure according to claim 1 or 2, wherein the porosity of the porous structure layer is 4% to 60%.

4. The antifouling structure according to claim 1 or 2, wherein the porosity of the porous structure layer is 4% to 45%.

5. The antifouling structure according to claim 1 or 2, wherein the porosity of the porous structure layer is 30% to 45%.

6. The antifouling structure according to any one of claims 1 to 5, wherein a surface of the porous structure layer and an inner surface of the micropores are modified with alkoxyoligomer having a hydrocarbon-based functional group.

7. The antifouling structure according to claim 6, wherein the non-volatile liquid has a molecular structure with dimethyl silicone in a main chain.

8. The antifouling structure according to any one of claims 1 to 5, wherein the surface of the porous structure layer and the inner surface of the micropores are modified with alkoxyoligomer having a fluorine containing functional group.

9. The antifouling structure according to claim 8, wherein the non-volatile liquid has a molecular structure having perfluoroether in a main chain.

10. The antifouling structure according to any one of claims 1 to 9, wherein, in the porous structure layer, substantially spherical voids that are randomly disposed in three-dimensional directions communicate to each other to form the micropores.

11. The antifouling structure according to any one of claims 1 to 10, wherein a difference in surface free energy between the porous structure layer and the non-volatile liquid is 10 mJ/m$^2$ or less.

*FIG. 1*

0.3/8 1.5kV 6.1mm x50.0k SE(M)      1.00um

*FIG. 2*

0.4/3-N1 1.5kV 7.2mm x50.0k SE(M)          1.00um

*FIG. 3*

0.275/3 1.5kV 5.0mm x50.0k SE(M)    1.00um

## FIG. 4

0.25/10 1.5kV 6.0mm x50.0k SE(M)      1.00um

*FIG. 5*

TEOS-1401 2.0kV 5.7mm x50.0k SE(M)          1.00um

*FIG. 6*

*FIG. 7*

## INTERNATIONAL SEARCH REPORT

International application No.

PCT/JP2017/029477

### A. CLASSIFICATION OF SUBJECT MATTER

$B32B5/18(2006.01)i$, $B60J1/00(2006.01)i$, $C09K3/18(2006.01)i$, $G02B1/18(2015.01)i$

According to International Patent Classification (IPC) or to both national classification and IPC

### B. FIELDS SEARCHED

Minimum documentation searched (classification system followed by classification symbols)
B32B5/18, B60J1/00, C09K3/18, G02B1/18

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2017 |
| Kokai Jitsuyo Shinan Koho | 1971–2017 | Toroku Jitsuyo Shinan Koho | 1994–2017 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>A | WO 2015/155830 A1 (Nissan Motor Co., Ltd.),<br>15 October 2015 (15.10.2015),<br>claims 1, 2, 6 to 9; paragraphs [0011], [0021],<br>[0026] to [0029], [0034] to [0037]; paragraph<br>[0046], table 1; paragraph [0047], table 2<br>(Family: none) | 1-5,8-11<br>6-7 |
| A | JP 2005-112911 A (Matsushita Electric Works,<br>Ltd.),<br>28 April 2005 (28.04.2005),<br>claims 1, 2, 4; paragraphs [0032] to [0034],<br>[0039], [0043], [0049] to [0052]; paragraph<br>[0072], table 1; paragraph [0074], table 2; fig.<br>1<br>(Family: none) | 1-11 |

☒ Further documents are listed in the continuation of Box C. ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| | |
|---|---|
| Date of the actual completion of the international search<br>09 November 2017 (09.11.17) | Date of mailing of the international search report<br>21 November 2017 (21.11.17) |
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

**INTERNATIONAL SEARCH REPORT**

| International application No. |
| --- |
| PCT/JP2017/029477 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2017-001363 A (Nissan Motor Co., Ltd.), 05 January 2017 (05.01.2017), claims; paragraph [0032] (Family: none) | 1-11 |
| A | JP 2015-66849 A (Nissan Motor Co., Ltd.), 13 April 2015 (13.04.2015), claims; paragraph [0041], table 3; fig. 1 (Family: none) | 1-11 |
| A | WO 2017/013810 A1 (Nissan Motor Co., Ltd.), 26 January 2017 (26.01.2017), claims 1 to 18; paragraphs [0004], [0005] (Family: none) | 1-11 |
| A | JP 2015-63061 A (Nissan Motor Co., Ltd.), 09 April 2015 (09.04.2015), claims 1, 11; paragraph [0040], table 1; paragraph [0042], table 3; paragraph [0044], table 5; paragraph [0048], table 6; paragraph [0049], table 7 (Family: none) | 1-11 |
| A | WO 2009/066630 A1 (Konica Minolta Holdings, Inc.), 28 May 2009 (28.05.2009), claims 1, 10, 13 (Family: none) | 1-11 |
| A | WO 2008/120505 A1 (Konica Minolta Holdings, Inc.), 09 October 2008 (09.10.2008), claims 1, 2, 8; paragraphs [0053] to [0074] (Family: none) | 1-11 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008120505 A